# EUROPÄISCHE PATENTSCHRIFT

(11) **EP 1 736 338 B1**
(45) Veröffentlichungstag und Bekanntmachung des Hinweises auf die Patenterteilung: **26.01.2011**
(21) Anmeldenummer: 06012462.5
(22) Anmeldetag: 17.06.2006
(51) Int. Cl.: B60J 7/14

(54) **Cabriolet-Fahrzeug mit einem hinteren Dachteil**
Convertible with a rear roof element
Cabriolet avec un élément de toit arrière

(30) Priorität: 22.06.2005 DE 102005028802
(43) Veröffentlichungstag der Anmeldung: 27.12.2006
(73) Patentinhaber: Wilhelm Karmann GmbH, 49084 Osnabrück (DE)
(72) Erfinder: Theuerkauf, Jürgen, 49560 Bramsche (DE)
(74) Vertreter: Kronthaler, Schmidt & Coll.

(56) Entgegenhaltungen:
- DE-B3-102004 029 153
- DE-U1- 29 823 383
- JP-A- 62 157 825

## Beschreibung

Die Erfindung betrifft ein Cabriolet-Fahrzeug mit zumindest zwei bei geschlossenem Dach hintereinander folgenden Dachteilen, die bei Dachöffnung absenkbar und insbesondere zumindest bereichsweise oberhalb einer hinteren Sitzreihe ablegbar sind, nach dem Oberbegriff des Anspruchs 1.

Es ist bekannt, Cabriolet-Fahrzeuge mit mehreren hintereinander liegenden und beispielsweise jeweils plattenförmigen oder zumindest jeweils einen starren Rahmen ausbildenden beweglichen Dachteilen zu versehen und diese oberhalb einer hinteren Sitzreihe abzulegen, da das Fahrzeug in Offenstellung ohnehin zumeist nur von ein oder zwei Personen genutzt wird und der Kofferraum von den abgelegten Dachteilen dann nur wenig beeinträchtigt sein muß.

Die DE 101 52 944 A1 zeigt die nahezu horizontale und gleichsinnig orientierte Ablage von zwei Dachteilen oberhalb einer eingeklappten Rückbank, wobei zur Verschachtelung der Dachteile zunächst ein Aufschwenken des hinteren Dachteils in eine gegenüber seiner geschlossenen Stellung steilere Position erforderlich ist. Dabei taucht das hintere, untere Ende des hinteren Dachteils in die Karosserie ein, was die verbleibende Größe des Kofferraums verringert. Zudem findet in Längsrichtung während der Ablage durch das Abwärtsschwenken des dort mit dem Bezugszeichen 6b versehenen Hebels eine leichte Heckwärtsverlagerung des hinteren Dachteils statt, was nur möglich ist, wenn heckwärts anschließend noch weiterer Karosserieraum, etwa ein Stufenheck, zur Verfügung steht. Dadurch ist die dort gezeigte Kinematik nicht auf die räumlichen Verhältnisse von Klein- oder Kompaktwagen oder andere Steilheckfahrzeuge ohne Stufenheck übertragbar, bei denen wie in einer vollständig geschlossenen Version auch in einer Cabriolet-Version der hinterste Dachteil sich zumindest nahezu bis zu dem hinteren Abschluß der Karosserie erstrecken soll. Eine solche Kinematik würde dort dazu führen, daß das Dach in geöffneter Stellung über das Heck hinausragen müßte.

Die JP 62 157 825 zeigt eine gattungsgemäßes Cabriofahrzeug.

Der Erfindung liegt das Problem zugrunde, auch bei Fahrzeugen ohne Stufenheck eine Dachablage zumindest im teilweise oberhalb von hinteren Sitzen oder in einem räumlich ähnlich gelegenen Abschnitt des Fahrzeugs zu ermöglichen.

Die Erfindung löst dieses Problem durch ein Cabrioletfahrzeug mit den Merkmalen des Anspruchs 1. Hinsichtlich vorteilhafter Ausgestaltungen und Weiterbildungen der Erfindung wird auf die weiteren Ansprüche 2 bis 12 verwiesen.

Erfindungsgemäß ist in Ausbildung nach Anspruch 1 mit den unten in der Karosserie beweglich angebundenen Bewegungsvermittlern, die etwa als einfache Lenker ausgebildet sein können, erreicht, daß die seitlichen Dachsäulen den abgestützten Dachbereich ohne weitere Mechanik im Öffnungs- oder Schließsinn bewegen können. Die Bewegungsvermittler sind dabei im Innern der Karosserie optisch verdeckt gehalten, so daß die äußere Dachgestalt der eines geschlossenen Fahrzeugaufbaus entsprechen kann. Das Dach kann über die Einwärtsbewegung der Dachsäulen abwärts und gleichzeitig auch mit einer Komponente in Fahrzeuglängsrichtung verlagerbar sein und benötigt während der Öffnung keine weitere Anbindung an die Karosserie. Dadurch ist die Bewegungsmechanik einfach ausführbar.

In der Ausbildung nach Anspruch 2 können die Dachsäulen platzsparend in eine flache, nahezu horizontal liegende Stellung unterhalb des von ihnen abgestützten Dachteils einfaltbar sein. Somit kann die Dicke des Pakets aus abgelegten Dachteilen gering gehalten sein. Dabei können die Schwenkachsen für die Dachsäulen an beiden Seiten unsymmetrisch liegen, um so ein Übereinanderfalten der Dachsäulen bei abgelegtem Dach zu erreichen. Damit können die Dachsäulen dann eine große Höhenerstreckung haben und bei geöffnetem Dach über die vertikale Fahrzeuglängsmittelebene hinausragen, ohne miteinander zu kollidieren.

Wenn die Dachsäulen mit ihren unteren Enden über die Bewegungsvermittler einwärts verlagerbar und mit ihren oberen Enden mit einem zumindest teilweise vorgeordneten Dachteil gelenkig verbunden sind, knicken zur Dachöffnung die Dachsäulen und die darunter liegenden Bewegungsvermittler x-förmig zur Fahrzeuglängsebene ein, während die oberen Gelenke zwischen den Dachsäulen und dem weiteren Dachteil ihre Stellung bezüglich einer vertikalen Fahrzeuglängsebene beibehalten.

Eine besonders einfache Anbindung der Bewegungsvermittler läßt sich durch Gelenkanordnungen mit jeweils nur einem Schwenkfreiheitsgrad sicherstellen.

Dann findet die Einfaltung der Bewegungsvermittler nur als Schwenkbewegung um einfache Schwenkachsen statt, die in jedem Fall eine Komponente in Fahrzeuglängsrichtung aufweisen. Zusätzlich kann eine Komponente in Richtung der vertikalen Längsmittelebene und/oder eine in Fahrtrichtung eine ansteigende oder abfallende Komponente vorgesehen sein, um dadurch nicht nur eine reine Absenkbewegung des Daches, sondern synchron zusätzlich eine Verlagerung des Daches auch noch nach vorne oder hinten in Fahrzeuglängsrichtung durchführen zu können.

Dabei kann auch die Achse der Anbindung der Dachsäule an einen Bewegungsvermittler schräg zur Schwenkachse der Anbindung des Bewegungsvermittlers an der Karosserie stehen und so jede Ausrichtung der Schwenkachse verkantungsfrei ermöglichen.

Vorteilhaft schließt an die Dachsäulen in Fahrtrichtung ein weiterer, zumindest im wesentlichen in sich starrer Dachbereich an, für diese Anbindung neben einer eigentlichen Bewegungsachse eine zusätzliche Ausgleichsachse vorgesehen ist. Damit ist auch bei windschiefen Achsen ohne einen gemeinsamen Schnittpunkt eine verkantungsfreie Dachbewegung möglich.

Es ist zudem möglich, das Dach nur gering in Fahrzeuglängsrichtung zu verlagern und dennoch die vordere Sitzreihe bei der Dachöffnung freizugeben, wenn der weitere Dachbereich zumindest eine Querteilung in zwei oder mehr Abschnitte aufweist und zumindest ein vorderer Abschnitt gegenüber einem hinteren während der Dachöffnung zur Verkürzung der Erstreckung des Dachbereichs in Fahrzeuglängsrichtung relativbeweglich ist.

Beispielsweise kann sehr einfach der vordere gegenüber dem hinteren Abschnitt nach unten einschwenkbar sein und auch bei geöffnetem Dach, wenn der hintere Abschnitt etwa oberhalb einer Rückbank liegt, vertikal nach unten weisen. Dann ist auch ein Zugriffsschutz für den von dem hinteren Dachabschnitt abgedeckten Fahrzeugbereich erreicht.

Weitere Vorteile und Merkmale der Erfindung ergeben sich aus in der Zeichnung schematisch dargestellten und nachfolgend beschriebenen Ausführungsbeispielen des Gegenstandes der Erfindung.

### In der Zeichnung zeigt:

- Fig. 1: eine schematische perspektivische Ansicht von schräg hinten eines erfindungsgemäßen Cabriolet-Fahrzeugs bei geschlossenem Dach mit zusätzlich angedeuteten Schwenkachsen,

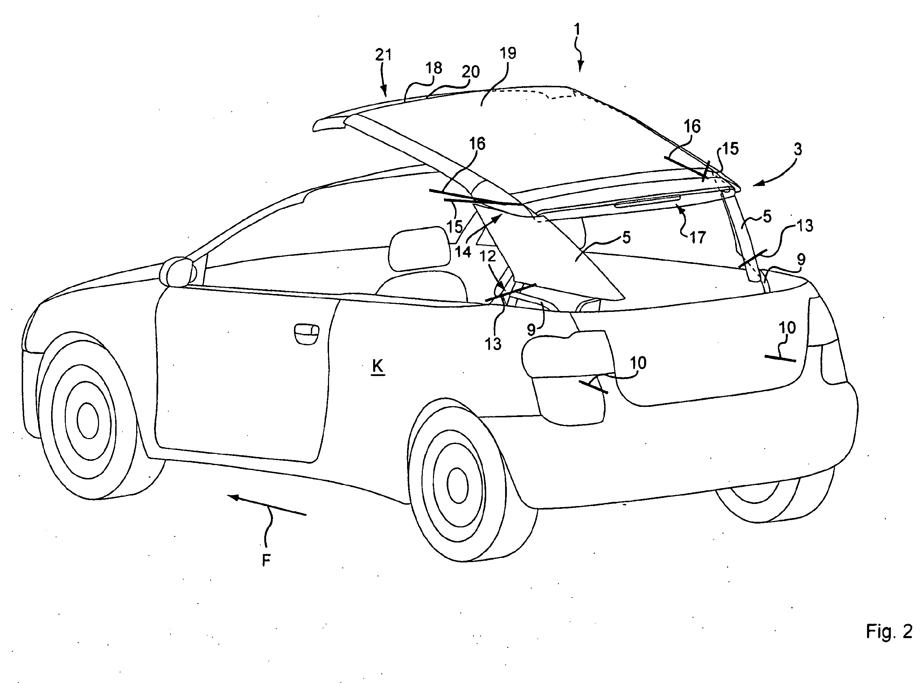

- Fig. 2: eine ähnliche Ansicht wie Fig. 1 während der beginnenden Dachöffnung mit Einwärtsschwenken der seitlich angebundenen Bewegungsvermittler und der daran gehaltenen Dachsäulen sowie mit nach unten einschwenkendem vorderem Dachabschnitt,

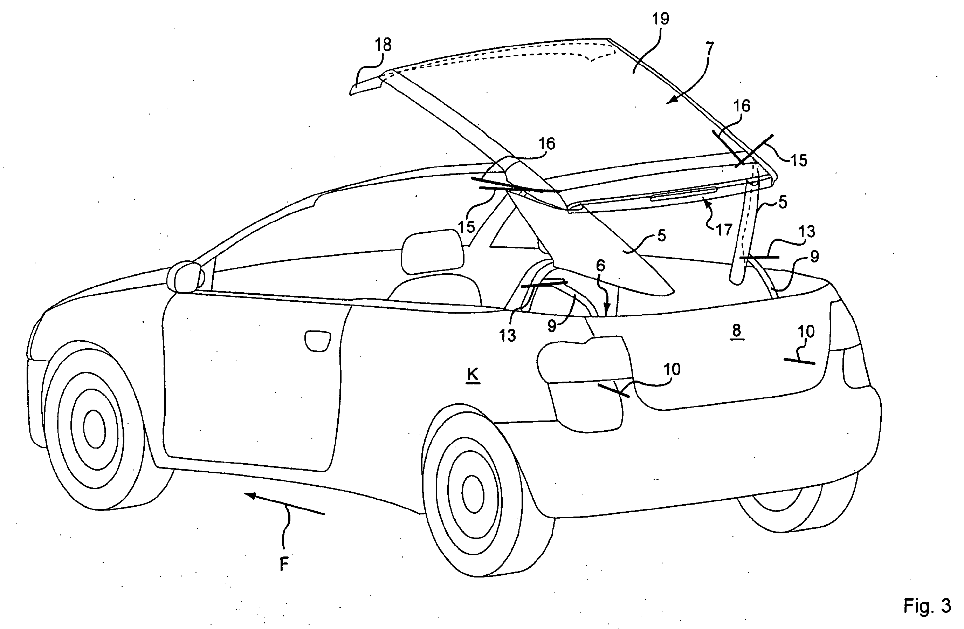

- Fig. 3: eine ähnliche Ansicht wie Fig. 2 während der weiter fortschreitenden Dachöffnung mit Anheben des abgestützten Dachbereichs,

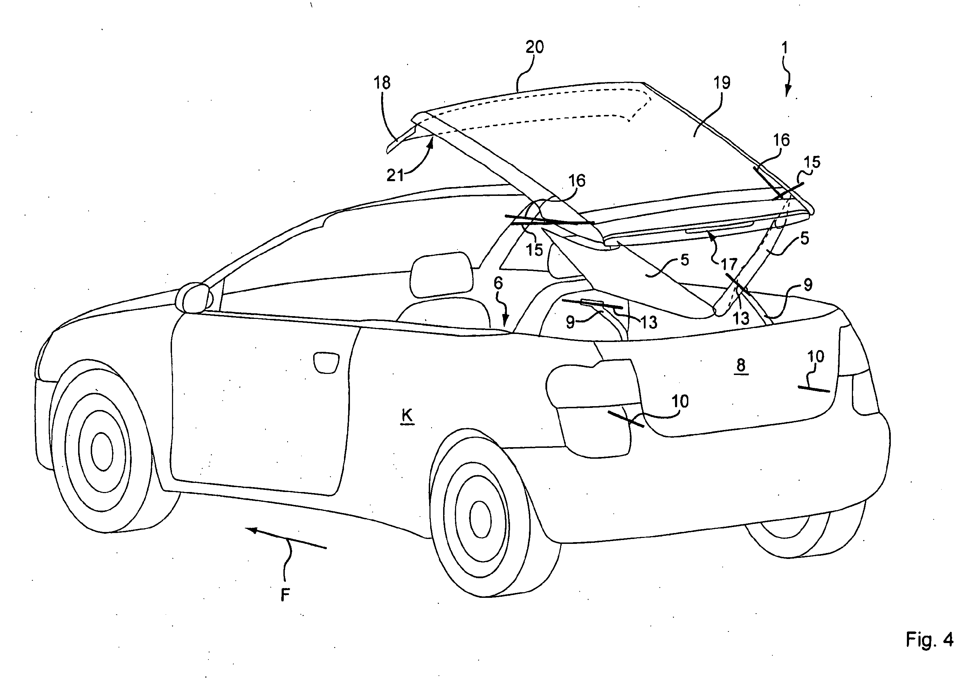

- Fig. 4: eine ähnliche Ansicht wie Fig. 3 während der weiter fortschreitenden Dachöffnung,

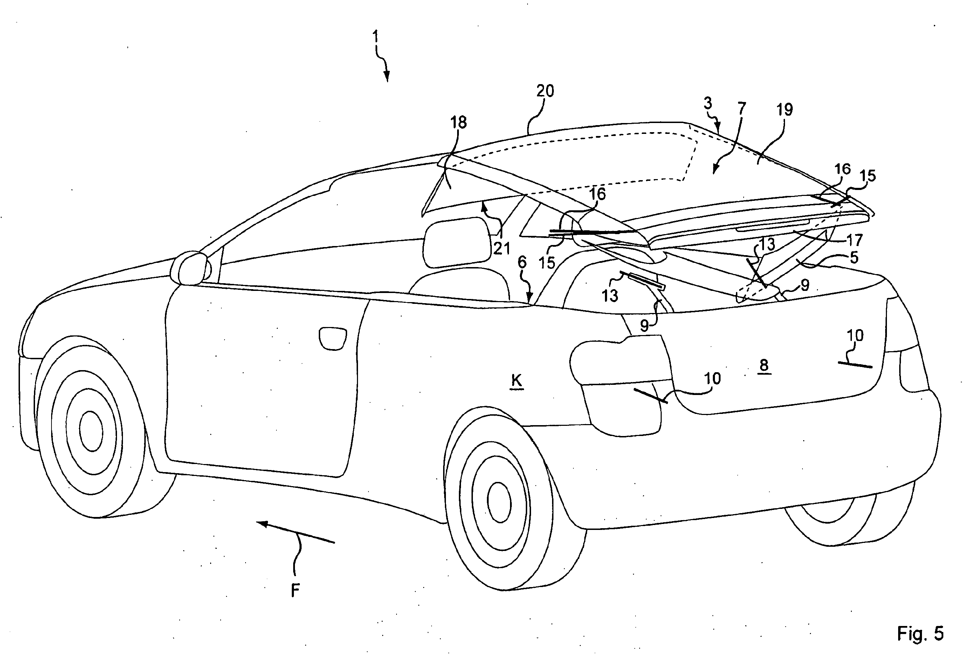

- Fig. 5: eine ähnliche Ansicht wie Fig. 4 während der weiter fortschreitenden Dachöffnung,

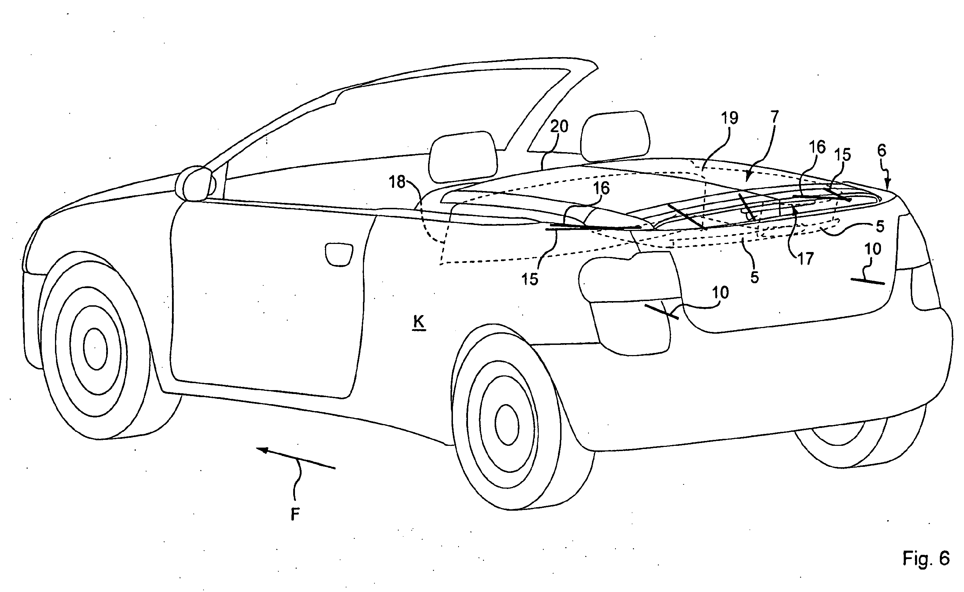

- Fig. 6: eine ähnliche Ansicht wie Fig. 5 bei vollständiger Dachöffnung,

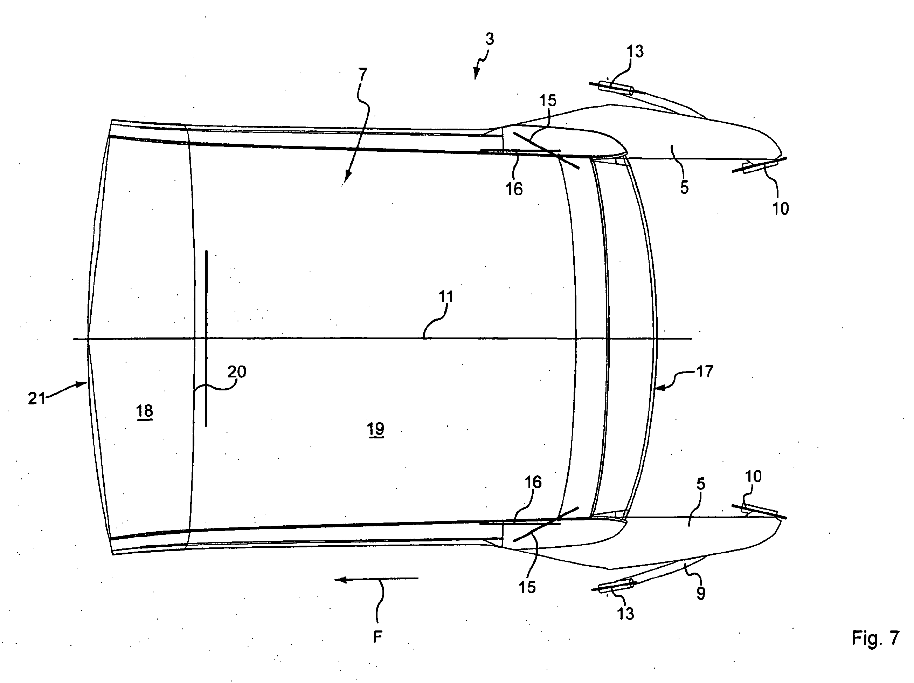

- Fig. 7: eine Ansicht von oben auf das Dach in Stellung nach Fig. 1,

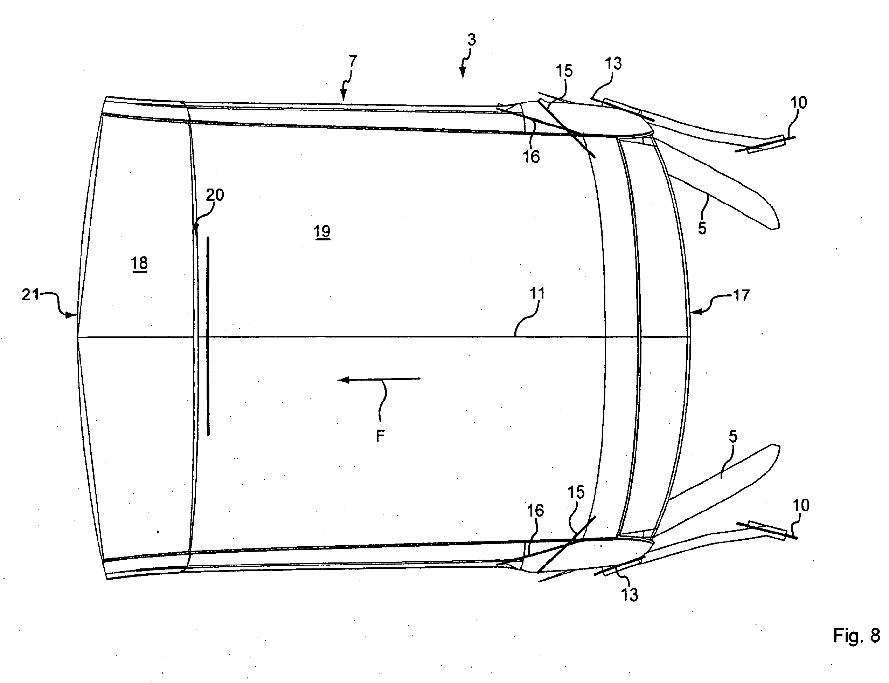

- Fig. 8: eine ähnliche Ansicht wie Fig. 7 auf das Dach ungefähr in Stellung nach Fig. 2,

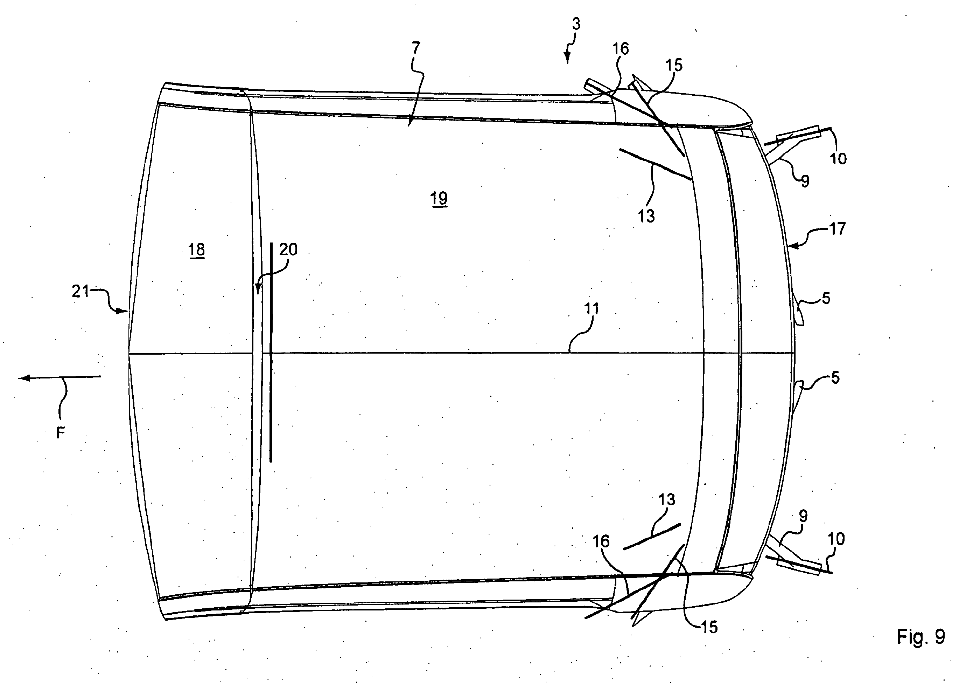

- Fig. 9: eine ähnliche Ansicht wie Fig. 8 auf das Dach ungefähr in Stellung nach Fig. 5,

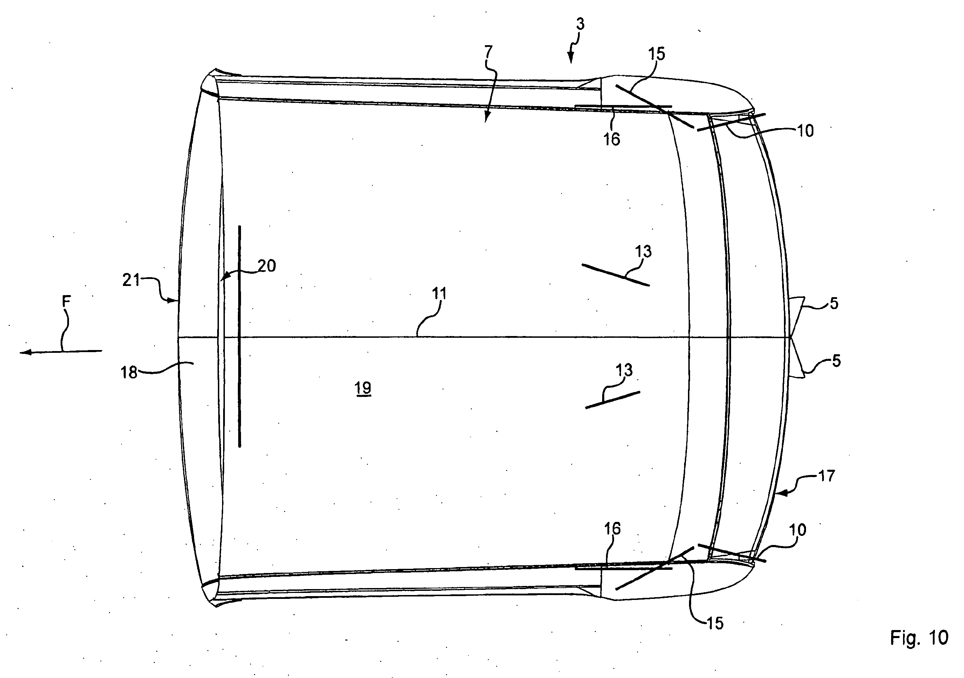

- Fig. 10: eine ähnliche Ansicht wie Fig. 9 auf das Fahrzeug bei vollständig geöffnetem Dach nach Fig. 6,

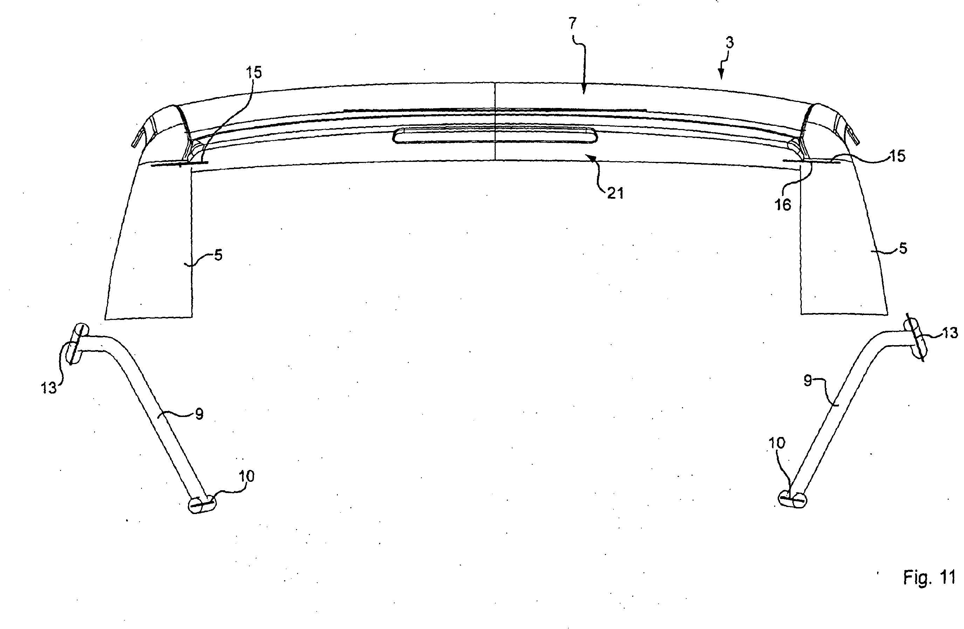

- Fig. 11: eine Ansicht von hinten auf das geschlossene Dach nach Fig. 1,

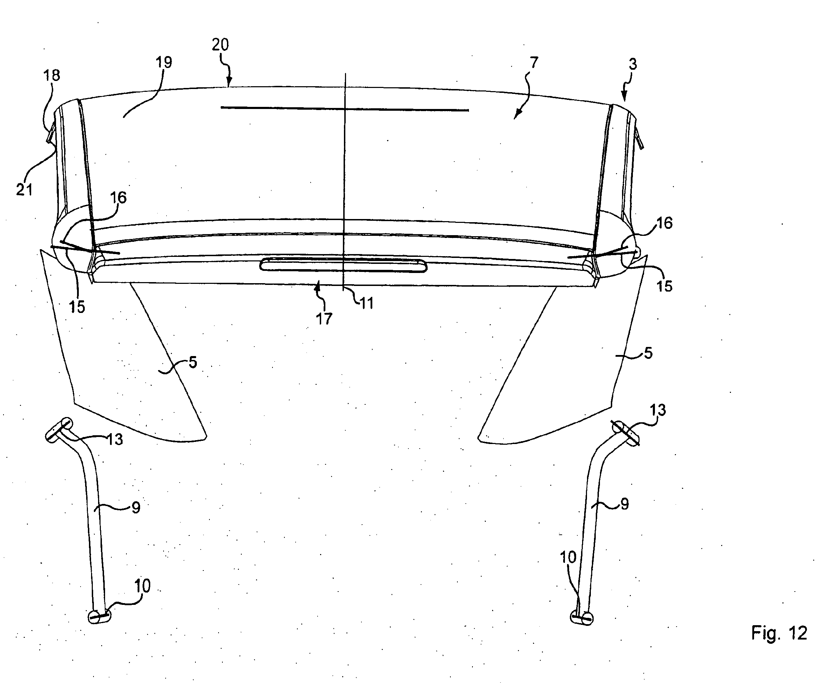

- Fig. 12: eine ähnliche Ansicht wie Fig. 11 auf das Dach ungefähr in Stellung nach Fig. 2,

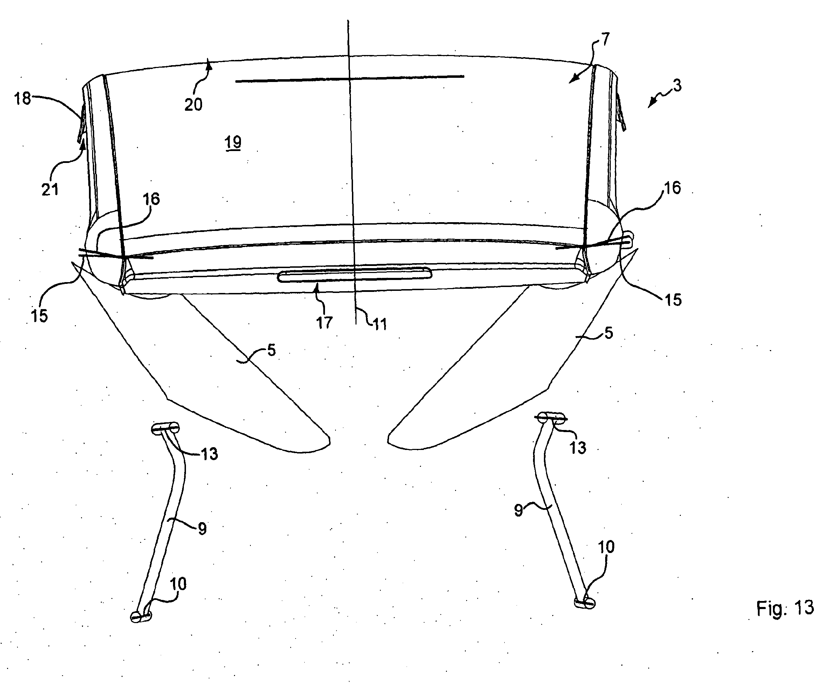

- Fig. 13: eine ähnliche Ansicht wie Fig. 11 auf das Dach ungefähr in Stellung nach Fig. 3,

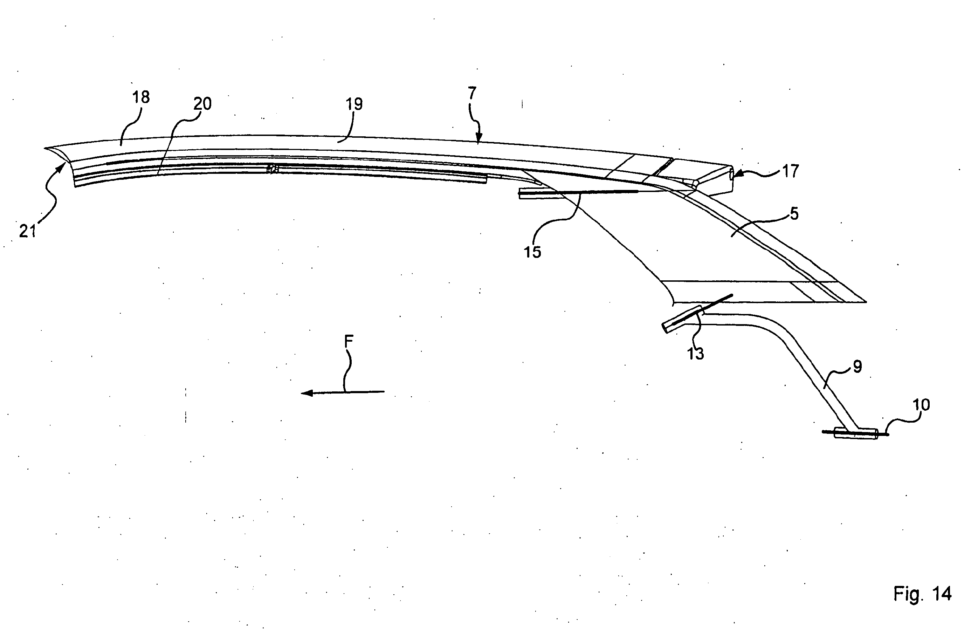

- Fig. 14: eine Seitenansicht des Daches in geschlossener Stellung nach Fig. 1,

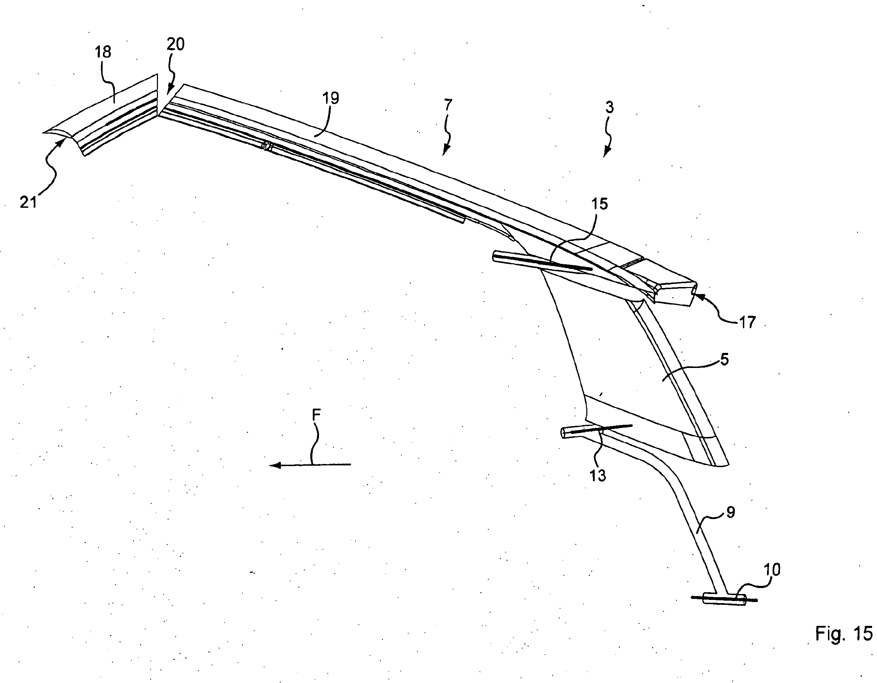

- Fig. 15: eine ähnliche Ansicht wie Fig. 14 auf das Dach ungefähr in Stellung nach Fig. 2,

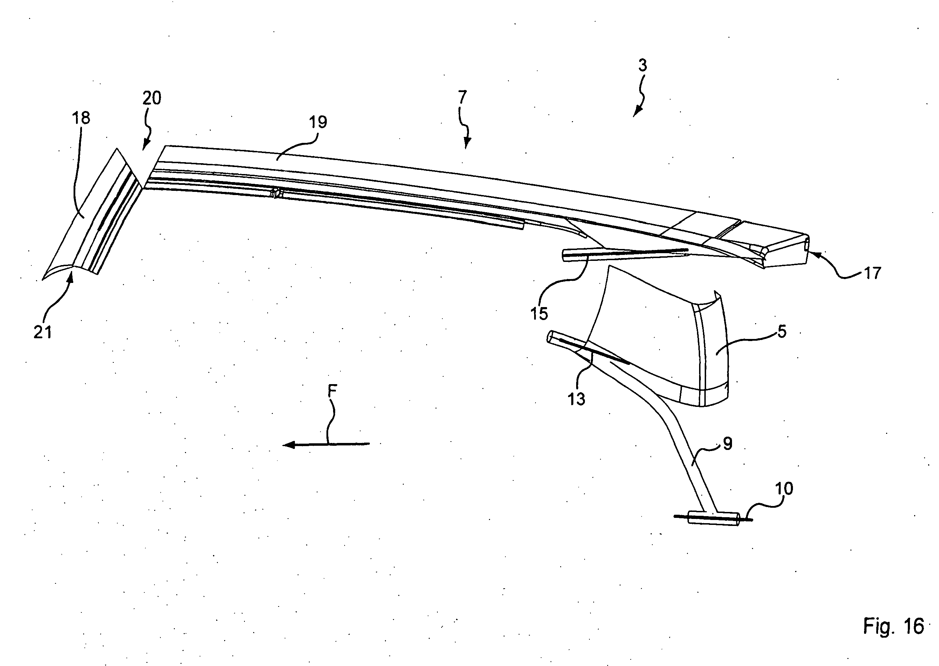

- Fig. 16: eine ähnliche Ansicht wie Fig. 16 auf das Dach ungefähr in Stellung nach Fig. 5,

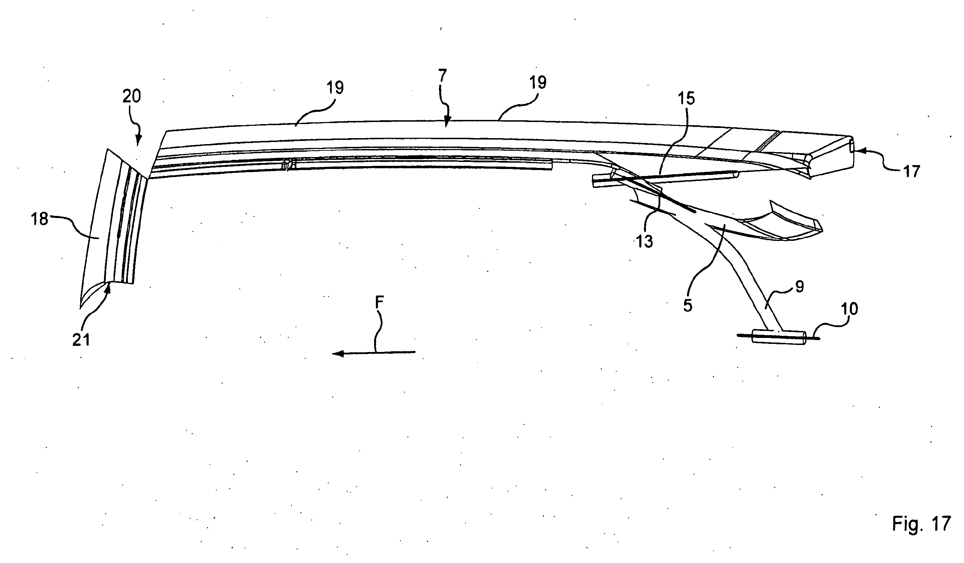

- Fig. 17: eine ähnliche Ansicht wie Fig. 16 auf das geschlossene Dach in Stellung nach Fig. 6.

Das in der Zeichnung dargestellte Cabriolet-Fahrzeug 1 weist eine hinterste Sitzreihe 2 auf, die bei geschlossenem Dach 3 nutzbar und bei geöffnetem Dach 3 von diesem überdeckt ist. Die Sitzreihe 2 kann eine zweite oder dritte Sitzreihe im Fahrzeug 1 darstellen. Sie kann zur Dachöffnung vollständig oder nur hinsichtlich der Lehnen umlegbar sein. Dabei ist es nicht zwingend, daß das Dach 3 oberhalb einer Sitzreihe 2 ablegbar ist. Auch ein anderer geeigneter Raum im Fahrzeug 1 kommt in Betracht.

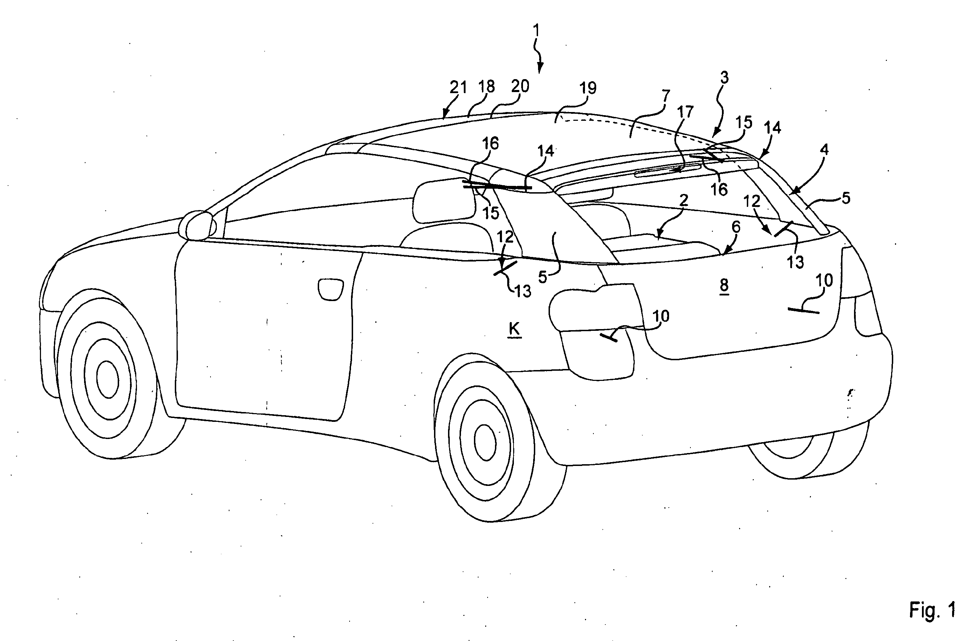

Das manuell oder insbesondere voll- oder teilautomatisch bewegliche Dach 3 umfaßt einen hinteren Dachteil 4 mit einer Heckscheibe - nicht gezeichnet - und zumindest überwiegend seitlich davon erstreckten Dachsäulen 5, die von einer Fensterbrüstungslinie 6 aufwärts ragen und einen insgesamt mit 7 bezeichneten Dachbereich abstützen, der in geschlossener Dachstellung nahezu horizontal oberhalb des Insassenraums liegen kann. Die Dachsäulen 5 können neben der Aufwärtserstreckung überwiegend eine Erstreckung in Fahrzeuglängsrichtung aufweisen, so daß eine äußere Gestalt des Heckbereichs wie bei einem Kompakt- oder Steilheckfahrzeug erreicht sein kann (Fig. 1). Ein solches Fahrzeug 1 kann daher beispielsweise auch einen Kleinwagen, einen Geländewagen oder einen Van ausbilden.

Die Heckscheibe ist gegenüber den Dachsäulen 5, die beispielsweise sog. B-, D-Säulen oder gemäß der Zeichnung C-Säulen im Fahrzeug 1 darstellen können, relativbeweglich und etwa abwärts in eine Heckklappe 8 oder aufwärts unterhalb des abgestützten Dachbereich 7 verlagerbar oder manuell entnehmbar.

Die Dachsäulen 5 sind über unterhalb der Fensterbrüstungslinie 6 an der Karosserie K angebundene Bewegungsvermittler 9 beweglich. Diese sind in einfacher Ausbildung jeweils als Lenker gestaltet und an ihren Karosserieanbindungen um Achsen 10 verschwenkbar. Die Achsen 10 weisen eine Komponente in Fahrzeuglängsrichtung auf, so daß die Schwenkbewegung um diese Achsen 10 eine einwärts in Richtung einer vertikalen Fahrzeuglängsmittelebene 11 weisende Komponente der der Anbindung abgewandten Enden der Lenker 9 umfaßt.

An den der Anbindung abgewandten Enden der Lenker 9 sind über weitere Gelenke 12 mit Schwenkachsen 13 die unteren Enden der Dachsäulen 5 gehalten. Diese werden daher bei Schwenken der Lenker 9 um die Achsen 10 mit einwärts in Richtung der Ebene 11 gezogen, wohingegen obere Verbindungen 14 zwischen den Dachsäulen 5 und dem Dachbereich 7 bei dieser Bewegung in derselben vertikalen Fahrzeuglängsebene wie bei geschlossenem Dach 3 verbleiben.

Die seitlichen Dachsäulen 5 können dadurch bei Dachöffnung gegenüber dem von diesen abgestützten Dachbereich 7 in ihrer Schwenkbewegung mit einer Komponente in Richtung der vertikalen Fahrzeuglängsmittelebene 11 in eine flach und vollständig oder zumindest überwiegend von dem Dachbereich 7 überdeckte Lagerstellung einfaltbar sein.

Neben einer eigentlichen Bewegungsachse 15 für die gelenkigen Verbindungen 14 zwischen Dachsäulen 5 und abgestütztem Dachbereich 7 ist eine zusätzliche Ausgleichsachse 16 vorgesehen, um die nur wenig geschwenkt wird, mit deren Hilfe jedoch ein Verkanten des beidseitig angebundenen Dachbereichs 7 verhindert ist. Anstelle der Ausgleichsachse 16 könnte in besonderen Fällen auch eine dem Dachbereich 7 immanente Elastizität genutzt werden. Ebenso ist es alternativ möglich, die im wesentlichen in Fahrzeuglängsrichtung weisende Ausgleichsachse 16 dem Gelenk 12 zuzuordnen. In jedem Fall können mit der Ausgleichsachse 16 die Achsen 10 und 13 der Anbindungen der Bewegungsvermittler 9 an der Karosserie K bzw. des Gelenks 12 zwischen den Bewegungsvermittlern 9 und den Dachsäulen 5 schräg oder gar windschief zueinander stehen.

Dadurch können die Achsen 10 und 13 so gelegt werden, daß sie beispielsweise eine Komponente in Richtung der vertikalen Längsmittelebene 11 und/oder jeweils in Fahrtrichtung F eine ansteigende Komponente aufweisen. Somit wird es möglich, trotz des nur einen Freiheitsgrads bei Bewegung um die Achse 10 je nach Fahrzeug 1 eine angepaßte Dachbewegung mit nicht nur eine auf- oder abwärtsgerichteten Komponente, sondern mit einer zusätzlichen Längsverlagerung zu erreichen. Im Ausführungsbeispiel weist die Achse 10 in Fahrtrichtung F eine Aufwärtskomponente auf. Damit wird bei der Abwärtsverlagerung zur Dachöffnung das obere Ende des Bewegungsvermittlers 9, und damit auch das Dach 3 insgesamt, nicht nur abwärts, sondern auch heckwärts verlagert. Dies bewirkt eine optimierte Dachablage, da die Dachsäulen 5 bei geschlossenem Dach eine nach vorne weisende Schrägstellung zeigen und somit die hintere Kante 17 des Dachbereichs 7 bei geschlossenem Dach mit Längsabstand zum hinteren Fahrzeugende steht und bei Absenken des Daches 3 Raum hat, um bis zum hinteren Fahrzeugende nach hinten gezogen zu werden. Bei einem Steilheck mit vertikal stehenden Dachsäulen könnte die Bewegung auch eine reine Abwärtsverlagerung sein. Die Achsen 10 und 13 wären dann nur in Fahrzeuglängsrichtung erstreckt.

Wie in den Seitenansichten deutlich wird, ist als weiterer Vorteil durch die Schrägstellung der Achsen 10, 13 während der Dachbewegung eine schräge Aufwärtsstellung des Dachbereichs 7 insbesondere in seinem vorderen Teil erreicht. Dies vergrößert die Kopffreiheit für die vorderen Insassen während der Dachbewegung. Das vordere Ende 21 des Dachbereichs 7 beschreibt daher bei Öffnung eine zunächst aufwärts gerichtete und erst nach bereits erfolgter Heckwärtsverlagerung abwärts gerichtete Bahnkurve, wodurch die Kopffreiheit der vorderen Insassen zu keinem Zeitpunkt der Bewegung eingeschränkt wird und auch ein Abklappen eines vorderen Abschnitts 18 (s. u.) während der Öffnung des Daches möglich wird.

Insgesamt werden daher bei Öffnen des Daches 2 die Bewegungsvermittler 9 heckwärts und in Richtung der vertikalen Fahrzeuglängsmittelebene 11 einwärts verschwenkt und nehmen den unteren Bereich der an den Gelenken 12 um die Achsen 13 schwenkbaren Dachsäulen 5 mit heckwärts und einwärts in Richtung der Ebene 11.

Da im allgemeinen diese Heckwärtsverlagerung zu gering ist, um die vordere Sitzreihe bei der Dachablage freizugeben, ist der abgestützte Dachbereich 7 zumindest einmal an einer Fuge 20. in zwei oder mehr gegenüber seiner Gesamtlängserstreckung verkürzte Abschnitte 18, 19 quergeteilt. Ein vorderer Abschnitt 18 ist bei der Dachöffnung gegenüber einem hinteren Abschnitt 19 relativbeweglich, zum Beispiel ähnlich wie ein Schiebedach über oder unter den hinteren Abschnitt 19 verfahrbar oder nach oben aufwärts klappbar oder, wie in der Zeichnung dargestellt, nach unten schwenkbar. Hier beträgt der Schwenkwinkel ungefähr 90°. Auch ein Einschwenken um 180° wäre möglich. Zumindest der an die Dachsäulen 5 anschließende Abschnitt des abgestützten Dachbereichs 7 bleibt hingegen bei der Dachöffnung gegenüber seiner geschlossenen Stellung ungewendet und erfährt daher eine Parallelverlagerung bis ungefähr in die Höhe der Fensterbrüstungslinie 6. Mit dem Schwenken des vorderen Abschnitts 18 ungefähr senkrecht nach unten kann dieser in Ablagestellung eine vordere Begrenzung des abgelegten Daches 3 und somit einen Schutz gegen unbefugten Zugriff in den von dem Dach 3 abgedeckten Raum bieten. Dieser Raum kann daher auch als weiterer Stauraum Verwendung finden.

Durch die flache Anlage der Dachsäulen 5 unter den Dachbereich 7 kann auch der Kofferraum nahezu in voller Größe erhalten bleiben.

## Patentansprüche

1. Cabriolet-Fahrzeug (1) mit einem hinteren, eine Heckscheibe umfassenden Dachteil (4),
**dadurch gekennzeichnet,**
**daß** der hintere Dachteil (4) seitliche Dachsäulen (5) und eine gegenüber diesen separat bewegliche Heckscheibe umfaßt, wobei die seitlichen Dachsäulen (5) an Bewegungsvermittlern (9) gehalten sind, die ihrerseits unterhalb einer Fensterbrüstungslinie (6) beweglich an der Karosserie (K) angebunden und zur Dachöffnung mit ihren der Anbindung abgewandten Enden mit einer Komponente in Richtung einer vertikalen Fahrzeuglängsmittelebene (11) einwärts verlagerbar sind und dabei die Dachsäulen (5) zumindest bereichsweise mit einwärts bewegen.

2. Cabriolet-Fahrzeug (1) mit einem hinteren, eine Heckscheibe umfassenden Dachteil (4), nach Anspruch 1,
**dadurch gekennzeichnet,**
**daß** der hintere Dachteil (4) seitliche Dachsäulen (5) und eine gegenüber diesen separat bewegliche Heckscheibe umfaßt, wobei die seitlichen Dachsäulen (5) gegenüber einem von diesen abgestützten Dachbereich (7) mit einer Komponente in Richtung einer vertikalen Fahrzeuglängsmittelebene (11) in eine zumindest überwiegend flach unter dem abgestützten Dachbereich (7) liegende Lagerstellung einfaltbar sind.

3. Cabriolet-Fahrzeug (1) nach einem der Ansprüche 1 oder 2,
**dadurch gekennzeichnet,**
**daß** die Dachsäulen (5) mit ihren unteren Enden über die Bewegungsvermittler (9) einwärts verlagerbar und mit ihren oberen Enden mit dem in geschlossener Stellung abgestützten Dachbereich (7) gelenkig (14) verbunden sind.

4. Cabriolet-Fahrzeug (1) nach einem der Ansprüche 1 bis 3,
**dadurch gekennzeichnet,**
**daß** für die gelenkigen Verbindungen (14) zwischen Dachsäulen (5) und abgestütztem Dachbereich (7) neben einer eigentlichen Bewegungsachse (15) eine zusätzliche Ausgleichsachse (16) vorgesehen ist.

5. Cabriolet-Fahrzeug (1) nach einem der Ansprüche 1 bis 4,
**dadurch gekennzeichnet,**
**daß** die Karosserieanbindungen jeweils eine Gelenkanordnung mit einem Schwenkfreiheitsgrad um eine Achse (10) für die Bewegung der Bewegungsvermittler (9) umfassen.

6. Cabriolet-Fahrzeug (1) nach Anspruch 5,
**dadurch gekennzeichnet,**
**daß** die Schwenkachsen (10) jeweils zumindest eine Komponente in Fahrtrichtung (F) und eine Komponente in Richtung der vertikalen Längsmittelebene (11) aufweisen.

7. Cabriolet-Fahrzeug (1) nach einem der Ansprüche 5 oder 6,
**dadurch gekennzeichnet,**
**daß** die Schwenkachsen (10) jeweils in Fahrtrichtung (F) eine ansteigende Komponente aufweisen.

8. Cabriolet-Fahrzeug (1) nach einem der Ansprüche 1 bis 7,
**dadurch gekennzeichnet,**
**daß** jede Dachsäule (5) an einen Bewegungsvermittler (9) über ein Gelenk (12) angebunden ist, dessen Achse (13) schräg zur Schwenkachse (10) der Anbindung des Bewegungsvermittlers (9) an der Karosserie (K) steht.

9. Cabriolet-Fahrzeug (1) nach einem der Ansprüche 1 bis 8,
**dadurch gekennzeichnet,**
**daß** die Achse (13) der Anbindung einer Dachsäule an den Bewegungsvermittler (9) und die Schwenkachse (10) der Anbindung des Bewegungsvermittlers (9) an der Karosserie (K) windschief zueinander stehen.

10. Cabriolet-Fahrzeug (1) nach einem der Ansprüche 1 bis 9,
**dadurch gekennzeichnet,**
**daß** der abgestützte Dachbereich (7) zumindest eine Querteilung (20) in zwei oder mehr Abschnitte (18;19) aufweist und zumindest ein vorderer Abschnitt (18) gegenüber einem hinteren (19 während der Dachöffnung zur Verkürzung der Erstreckung des Dachbereichs in Fahrzeuglängsrichtung relativbeweglich ist.

11. Cabriolet-Fahrzeug (1) nach Anspruch 10,
**dadurch gekennzeichnet,**
**daß** der vordere (18) gegenüber dem hinteren Abschnitt (19) nach unten einschwenkbar ist.

12. Cabriolet-Fahrzeug (1) nach einem der Ansprüche 10 oder 11,
**dadurch gekennzeichnet,**
**daß** zumindest der an die Dachsäulen (5) anschließende Abschnitt (19) des abgestützten Dachbereichs (7) gegenüber seiner geschlossenen Stellung ungewendet ablegbar ist.

## Claims

1. A cabriolet vehicle (1) having a rear roof part (4) including a rear window,
**characterised in that**
the rear roof part (4) includes lateral pillars (5) and a rear window which is separately movable with respect to these, wherein the lateral pillars (5) are held on motion communicators (9) which in turn are movably linked to the car body (K) underneath a window breast line (6) and which are, with a component in the direction of a vertical vehicle longitudinal central plane (11), inwardly displaceable by their ends opposite to the link for the opening of the roof, and which thereby at the same time move the pillars (5) inwardly at least in parts.

2. The cabriolet vehicle (1) having a rear roof part (4) including a rear window, according to Claim 1,
**characterised in that**
the rear roof part (4) includes lateral pillars (5) and a rear window which is separately movable with respect to these, wherein the lateral pillars (5) are able to be folded, with a component in the direction of a vertical vehicle longitudinal central plane (11), in respect to a roof area (7) supported by them into a storage position which is situated at least predominantly flat beneath the supported roof part (7).

3. The cabriolet vehicle (1) according to one of Claims 1 or 2,
**characterised in that**
the pillars (5) are inwardly displaceable by their lower ends via the motion communicators (9) and are hinged (14) by their upper ends to the roof area (7) which is supported when in its closed position.

4. The cabriolet vehicle (1) according to one of Claims 1 to 3,
**characterised in that**
an additional compensating axis (16) is provided for the hinged connections (14) between the pillars (5) and the supported roof area (7) in addition to the actual axis of motion (15).

5. The cabriolet vehicle (1) according to one of Claims 1 to 4,
**characterised in that**
the car body links each include a hinge assembly having one degree of freedom for pivoting about an axis (10) for the movement of the motion communicators (9).

6. The cabriolet vehicle (1) according to Claim 5,
**characterised in that**
the pivoting axes (10) each have at least one component in the direction of travel (F) and one component in the direction of the vertical longitudinal central plane (11).

7. The cabriolet vehicle (1) according to one of Claims 5 or 6,
**characterised in that**
the pivoting axes (10) each have a rising component in the direction of travel (F).

8. The cabriolet vehicle (1) according to one of Claims 1 to 7,
**characterised in that**
each pillar (5) is linked to a motion communicator (9) via a hinge (12), the axis (13) of which is oblique to the pivoting axis (10) of the link of the motion communicator (9) to the car body (K).

9. The cabriolet vehicle (1) according to one of claims 1 to 8,
**characterised in that**
the axis (13) of the link of a pillar to the motion communicator (9) and the pivoting axis (10) of the link of the motion communicator (9) to the car body (K) are skewed in respect to one another.

10. The cabriolet vehicle (1) according to one of Claims 1 to 9,
**characterised in that**
the supported roof area (7) has at least one transverse division (20) into two or more sections (18; 19), and at least one front section (18) is moveable in relation to a rear (19) section during the opening of the roof for the shortening of the extent of the roof area in the vehicle longitudinal direction.

11. The cabriolet vehicle (1) according to Claim 10,
**characterised in that**
the front (18) section is downwardly pivotable with respect to the rear section (19).

12. The cabriolet vehicle (1) according to one of Claims 10 or 11,
**characterised in that**
at least the section (19) of the supported roof area (7) joined to the pillars (5) is storable in a position which is unturned with respect to its closed position.

## Revendications

1. Véhicule cabriolet (1) comprenant un élément de toit (4) arrière qui comporte une lunette arrière,
**caractérisé en ce que**
l'élément de toit (4) arrière comporte des colonnes de toit (5) latérales et une lunette arrière mobile séparément par rapport à ces dernières, les colonnes de toit (5) latérales étant maintenues contre des transmetteurs de mouvement (9) qui, de leur côté, sont reliés de façon mobile à la carrosserie (K) au-dessous d'une ligne d'appui de fenêtre (6), qui, pour l'ouverture du toit, peuvent être déplacés vers l'intérieur par leurs extrémités opposées à la liaison, avec une composante en direction d'un plan médian longitudinal vertical du véhicule (11) et qui, en même temps, déplacent vers l'intérieur, au moins en partie, les colonnes de toit (5).

2. Véhicule cabriolet (1) comprenant un élément de toit (4) arrière qui comporte une lunette arrière, selon la revendication 1,
**caractérisé en ce que**
l'élément de toit (4) arrière comporte des colonnes de toit (5) latérales et une lunette arrière mobile séparément par rapport à ces dernières, les colonnes de toit (5) latérales pouvant être repliées, par rapport à une zone de toit (7) soutenue par ces dernières, avec une composante en direction d'un plan médian longitudinal vertical du véhicule (11), dans une position de rangement au moins en grande partie plane et située sous la zone de toit (7) soutenue.

3. Véhicule cabriolet (1) selon l'une des revendications 1 ou 2,
**caractérisé en ce que**
les colonnes de toit (5) peuvent être déplacées vers l'intérieur par leurs extrémités inférieures par l'intermédiaire des transmetteurs de mouvement (9) et sont reliées, au moyen d'une articulation (14), par leurs extrémités supérieures à la zone de toit (7) soutenue en position fermée.

4. Véhicule cabriolet (1) selon l'une des revendications 1 à 3,
**caractérisé en ce que**,
pour les liaisons (14) articulées entre les colonnes de toit (5) et la zone de toit (7) soutenue, il est prévu un axe compensateur (16) supplémentaire indépendamment d'un axe de mouvement (15) proprement dit.

5. Véhicule cabriolet (1) selon l'une des revendications 1 à 4,
**caractérisé en ce que**
les liaisons avec la carrosserie comportent respectivement un agencement d'articulation présentant un degré de liberté de rotation autour d'un axe (10) pour le déplacement des transmetteurs de mouvement (9).

6. Véhicule cabriolet (1) selon la revendication 5,
**caractérisé en ce que**
les axes de pivotement (10) présentent respectivement au moins une composante dans le sens de marche (F) et une composante dans le sens du plan médian longitudinal (11) vertical.

7. Véhicule cabriolet (1) selon l'une des revendications 5 ou 6,
**caractérisé en ce que**
les axes de pivotement (10) présentent respectivement dans le sens de marche (F) une composante montante.

8. Véhicule cabriolet (1) selon l'une des revendications 1 à 7,
**caractérisé en ce que**
chaque colonne de toit (5) est reliée à un transmetteur de mouvement (9) par l'intermédiaire d'une articulation (12) dont l'axe (13) est à l'oblique par rapport à l'axe de pivotement (10) de la liaison du transmetteur de mouvement (9) à la carrosserie (K).

9. Véhicule cabriolet (1) selon l'une des revendications 1 à 8,
**caractérisé en ce que**
l'axe (13) de la liaison d'une colonne de toit au transmetteur de mouvement (9) et l'axe de pivotement (10) de la liaison du transmetteur de mouvement (9) à la carrosserie (K) sont inclinés l'un par rapport à l'autre.

10. Véhicule cabriolet (1) selon l'une des revendications 1 à 9,
**caractérisé en ce que**
la zone de toit (7) soutenue présente au moins une séparation transversale (20) en deux sections (18 ; 19) ou plus et **en ce qu'**au moins une section avant (18) opère un déplacement relatif par rapport à une section arrière (19) pendant l'ouverture du toit pour réduire l'extension de la zone de toit dans le sens longitudinal du véhicule.

11. Véhicule cabriolet (1) selon la revendication 10,
**caractérisé en ce que**
la section avant (18) peut être pivotée vers le bas par rapport à la section arrière (19).

12. Véhicule cabriolet (1) selon l'une des revendications 10 ou 11,
**caractérisé en ce que**
au moins la section (19), adjacente aux colonnes de toit (5), de la section de toit (7) soutenue peut être déposée sans être retournée par rapport à sa position fermée.
